(19) Europäisches Patentamt
European Patent Office
Office européen des brevets

(11) **EP 2 183 402 B1**

(12) **EUROPEAN PATENT SPECIFICATION**

(45) Date of publication and mention
of the grant of the patent:
**21.03.2018 Bulletin 2018/12**

(51) Int Cl.:
*C23C 2/26* *(2006.01)*     *C23C 2/06* *(2006.01)*
*C23C 2/12* *(2006.01)*

(21) Application number: **08785556.5**

(22) Date of filing: **14.08.2008**

(86) International application number:
**PCT/EP2008/006708**

(87) International publication number:
**WO 2009/021743 (19.02.2009 Gazette 2009/08)**

(54) **METHOD FOR PRODUCING A COATED STEEL STRIP FOR PRODUCING TAYLORED BLANKS SUITABLE FOR THERMOMECHANICAL SHAPING, STRIP THUS PRODUCED, AND USE OF SUCH A COATED STRIP**

VERFAHREN ZUR HERSTELLUNG EINES BESCHICHTETEN STAHLBANDES ZUR HERSTELLUNG VON PLATINENZUSCHNITTEN ZUR THERMOMECHANISCHEN FORMGEBUNG, SO HERGESTELLTES BAND UND VERWENDUNG EINES SOLCHEN BANDES

PROCÉDÉ DE PRODUCTION DE BANDE D'ACIER REVÊTU POUR PRODUIRE DES ÉLÉMENTS TAYLORISÉS ADAPTÉS À LA MISE EN FORME THERMOMÉCANIQUE, BANDE PRODUITE, ET UTILISATION D'UNE TELLE BANDE REVÊTUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.08.2007 EP 07016018**

(43) Date of publication of application:
**12.05.2010 Bulletin 2010/19**

(73) Proprietor: **Muhr und Bender KG**
**57439 Attendorn (DE)**

(72) Inventors:
• **VAN TOL, Ron**
**2694 BZ 's-Gravenzande (NL)**

• **VERLOOP, Willem, Cornelis**
**2135 JZ Hoofddorp (NL)**

(74) Representative: **Neumann Müller Oberwalleney & Partner**
**Patentanwälte**
**Overstolzenstraße 2a**
**50677 Köln (DE)**

(56) References cited:
| | |
|---|---|
| **EP-A- 1 013 785** | **EP-A- 1 621 645** |
| **WO-A-2007/048883** | **WO-A2-2008/113426** |
| **DE-A1-102005 031 461** | **GB-A- 706 681** |
| **US-A1- 2001 042 393** | **US-A1- 2007 035 118** |

**Description**

The invention relates to a method for producing a coated steel strip for producing tailored blanks suitable for thermomechanical shaping. The invention also relates to the use of such a coated strip for manufacturing a product with high mechanical properties.

It is known in the art to form steel products by thermomechanical shaping of a blank, for instance by first hot drawing a blank into a product and than rapidly cooling the product. In that way, a product is obtained having high mechanical properties due to the rapid cooling. To prevent oxidation of the product during the hot drawing, the blank has been covered by a metallic coating such as aluminium or zinc. Usually the sheets are cut from a steel strip, which has been hot dip coated with a metallic coating. The production of coated steel strip comprising the steps of hot-rolling the steel, followed by hot-dip aluminium alloy coating and finally cold rolling is known from GB 706681 A.

Such products are often used in the automotive industry, in which there is a tendency to use lighter products having better mechanical properties, so-called 'tailored products'. It has been proposed to use the so-called tailor welded blank (TWB) for the thermomechanical shaping as discussed above. A TWB consists of two or more blanks that have been welded into one blank, in which the two or more blanks have different properties, for instance a different composition and/or a different thickness.

It has been found, however, that the use of coated TWBs for hot drawing is problematic. The blanks of which a TWB has been produced are of course coated with a metallic coating, but due to the welding of these blanks to form a TWB the edges of both or all blanks are affected and, moreover, the welded seams of the TWB do not possess a coating, which may cause problems during hot forming, for instance oxidation. Document WO2008/113426 and document DE102005031461 deal with methods for producing coated steel strips having a variable thickness along their lengths wherein the steel strips are cold rolled with variable thickness along their lengths after a coating is applied and before being thermo-mechanically shaped.

It is an object of the present invention to provide a method to produce a coated strip from which tailored products can be made, using hot forming of tailored blanks.

It is another object of the present invention to provide a coated strip from which tailored products can be made, using hot forming of tailored blanks.

It is still another object of the present invention to use the coated strip thus provided for manufacturing a tailored product with high mechanical properties.

According to the invention one or more of these objects can be reached by using a method according to claim 1..

By using this method a strip having a variable thickness has been provided with a coating over its full length, and from this strip tailored blanks can be cut, so-called tailor rolled blanks (TRBs). Such TRBs have at least one thicker section and one thinner section, with a section between each thicker and thinner section that gradually changes in thickness from the thicker section to the thinner section. The method according to the invention has the great advantage that the TRBs produced from the strip are coated over their full surface with the metallic coating since no welds are present, and thus such TRBs are directly suitable for hot forming, such as hot drawing of a product.

In a tailor rolled blank the thinner section is at least 15% thinner than the thickness of the thicker section, and typically the thinner section is approximately 30% thinner than the thickness of the thicker section. The strip from which a multitude of TRBs are cut thus has been provided with a deliberately imposed thickness variation. This strip thus has two or more different thicknesses which repeat along the length of the strip.

According to a preferred embodiment the cold rolling is performed such that the thicker sections obtain a thickness reduction of less than 15% and the thinner sections obtain a thickness reduction of more than 15%. Cold rolling such that the thicker sections obtain a thickness reduction of less than 15% has the advantage that the rolling forces remain relatively low.

It is possible to cold-roll the hot-rolled steel strip before the strip is provided with a variable thickness. In this way, a hot-rolled steel can be provided with the desired starting thickness for the cold-rolling to provide the strip with the variable thickness.

According to a preferred embodiment the metallic coating is provided by hot dip coating using a bath of aluminium or an aluminium alloy, preferably an aluminium alloy consisting of 2 - 4 wt% iron and optionally 8 - 12 wt% silicon, the remainder being aluminium and unavoidable impurities, more preferably an aluminium alloy consisting of 2 - 3,5 wt% iron and 9 - 10 wt% silicon, the remainder being aluminium and unavoidable impurities. In this way a suitable coating based on aluminium is provided on the strip for the hot forming of the products produced from the strip.

According to another preferred embodiment the metallic coating is provided by hot dip coating using a bath of zinc or a zinc alloy, preferably a zinc alloy consisting of 0.3 - 4.0 wt% magnesium and 0.05 - 6.0 wt% aluminium, optionally at most 0.2 wt% of one or more additional elements, the remainder being zinc and unavoidable impurities. In this way a suitable coating based on zinc is provided on the strip for the hot forming of the products produced from the strip. Preferably, the zinc alloy consists of 0.3 - 2.3 wt% Mg and 0.6 - 2.3 wt% Al, the remainder being zinc and unavoidable impurities, or 1.6 - 2.3 wt% Mg and 1.6 - 2.3 wt% Al, the remainder being zinc and unavoidable impurities. It has been found that these compositions provide a very good protection at lower than usual thicknesses.

Preferably the steel strip has the following composition in wt%: 0.15 < C < 0.5, 0.5 < Mn < 3.0, 0.1 < Si < 0.5, 0.01 < Cr < 1.0, Ti < 0.2, Al < 0.1, P < 0.1, Nb < 0.1, N < 0.01, S < 0.05, 0.0005 < B < 0.015, unavoidable impurities, the remainder being Fe. With this composition a steel strip has been provided that is very suitable to hot form the tailor rolled blanks cut from this steel strip.

More preferably, the steel strip has the composition in wt%: 0.15 < C < 0.40, 0.8 < Mn <1.5,0.1 < Si < 0.35, 0.01 < Cr < 1.0, Ti < 0.1, A1< 0.1, P< 0.05, Nb< 0.05, N < 0.01, S < 0.03, 0.0005 < B < 0.010, unavoidable impurities, the remainder being Fe. This composition provides a steel strip that is even better for hot forming of the tailor rolled blanks produced from this steel strip.

Most preferably, the steel strip has the composition in wt%: 0.15 < C < 0.25, 01.0 < Mn < 1.5, 0.1 < Si < 0.35, 0.01 < Cr < 0.8, preferably 0.1 < Cr < 0.4, 0.01 < Ti < 0.07, Al < 0.1, P < 0.05, Nb < 0.05, preferably Nb < 0.03, N < 0.01, S < 0.03, 0.0015 < B < 0.008, unavoidable impurities, the remainder being Fe. The steel strip with this composition provides the best tailor rolled blanks for hot forming.

For the steel compositions as described above it is recommended that $0 < Ti - 3.4*N$, preferably $0 < Ti - 3.4*N < 0.05$ wt%, more preferably $0 < Ti - 3.4*N < 0.02$ wt%. In this way enough titanium is present to stoichiometrically bind the nitrogen. Preferably not much more titanium is present, as indicated by the equations, since the excess titanium may react with carbon to form titaniumcarbide particles, which are hard and thus undesirable because they may damage the forming tools or cause excessive wear.

Preferably the strip is coated with a metallic coating having a thickness between 1 and 50 $\mu$m, preferably a thickness between 1 and 20 $\mu$m for a zinc or zinc alloy coating and preferably a thickness between 5 and 30 $\mu$m for an aluminium or aluminium alloy coating. These coating thicknesses have been found to provide a sufficient protection to the product during the lifetime of the product, and also provide enough protection during the hot forming of the products.

According to a second aspect, the invention also relates to the use of the coated steel strip provided in accordance with the method as described above for manufacturing a product with high mechanical properties, comprising the following steps:

- cutting the steel strip to obtain a blank having at least a thicker and a thinner section;
- heating the blank to a temperature above the Ac1 temperature so as to at least partially bring the blank in the austenite phase;
- shaping the blank to obtain the product;
- cooling the product rapidly, preferably at a cooling rate higher than the critical cooling rate, to impart the product with high mechanical properties.

This is the use that the producer of hot formed products can make of the steel strip as provided by the method according to the invention. To provide the high mechanical properties, the blank has to be heated to a temperature that is high enough that the steel of the blank will at least partially transform into the austenitic phase, and after hot forming the product has to be cooled fast enough.

Alternatively, the coated steel strip provided in accordance with the method as described above is used for manufacturing a product with high mechanical properties, comprising the following steps:

- cutting the steel strip to obtain a blank having at least a thicker and a thinner section;
- shaping the blank to obtain a precursor product;
- heating the precursor product to a temperature above the Ac1 temperature so as to at least partially bring the blank in the austenite phase;
- shaping the precursor product to obtain the product;
- cooling the product rapidly, preferably at a cooling rate higher than the critical cooling rate, to impart the product with high mechanical properties.

This is another way of using the coated steel strip as provided by the method according to the invention by the producer of hot formed products, in which an additional step is provided by which the blank is cold formed to obtain a precursor product. This precursor product is heated to a temperature above the Ac1 temperature, after which it is hot formed and rapidly cooled.

Preferably, the blank or precursor product is heated to a temperature above 950 °C. In this way one can be sure that the blank or precursor product will be transformed into the austenitic phase.

According to a preferred embodiment, excess material of the blank is removed by cutting after the shaping of the product. It is advisable to cut off excess material before the formed product is rapidly cooled, because due to the cooling the steel will harden, but it will often be necessary to cut off the excess material after cooling of the product.

The invention will be elucidated with the following examples.

According to a first example the starting point is a hot rolled steel strip having a width of 430 mm, a thickness of 3.0 mm and a length of for instance 700 m. The composition of the steel strip is 0.226 wt% C, 1.17 wt% Mn, 0.263 wt% Si, 0.002 wt% S, 0.013 wt% P, 0.188 wt% Cr, 0.0026 wt% B, 0.034 wt% Ti, <0.001 wt% Nb, 0.049 wt% Al, and 0.0040 wt% N. This steel type has a Rm value of at least 550 Mpa.

This steel strip is than aluminised by hot dip coating in an aluminium bath having a composition of 9.4 wt% silicon, 3.0 wt% iron, the remainder being aluminium with unavoidable impurities. The coating is applied in the usual way; the thickness of the coating thus applied is approximately 25 $\mu$m.

After the coating of the strip the strip is cold rolled to provide the strip with a variable thickness, having thicker portions, thinner portions and transitional portions between the thicker and thinner portions. The thicker portions are provided with a thickness of 1.8 mm and the thinner portions are provided with a thickness of 1.2 mm. The thicker portions have a length of alternately 200 mm and 340 mm; the thinner portions have a length of alternately 115 mm and 200 mm. The transitional portions have a length of 60 mm.

The coated strip having a variable thickness then is cut in tailor rolled blanks having a length of 1095 mm. These TRBs can for example be used to produce inner parts of a body in white.

These TRBs can be shaped thermomechanically in the following way. The TRB is heated to a temperature above the Ac1 temperature at a velocity of at least 5 °C/s, so above the transition temperature of the steel from ferrite into austenite. In practice, a temperature of 950 °C is chosen. The TRB is then shaped in the desired form by for instance hot deep drawing. To provide the formed TRB with the desired properties, the hot formed TRB is quenched at a cooling velocity above the critical velocity, for instance a velocity of 30 °C/s. Due to the fast quenching, the structure of the steel is at least partially martensitic. The Rm value is approximately 1500 MPa, the elongation Ag is still 5 to 6 %.

According to a second example the starting point is a hot rolled steel strip having a width of 620 mm, a thickness of 4.0 mm and a length of for instance 400 m. The composition of the steel strip is 0.223 wt% C, 1.18 wt% Mn, 0.24 wt% Si, 0.004 wt% S, 0.012 wt% P, 0.212 wt% Cr, 0.0032 wt% B, 0.033 wt% Ti, <0.001 wt% Nb, 0.038 wt% Al, and 0.0038 wt% N. This steel type has a Rm value of at least 460 Mpa.

This steel strip is provided with a zinc layer by hot dip coating in a zinc bath having a composition of 1.8 wt% magnesium, 1.8 wt% aluminium, the remainder being zinc with unavoidable impurities. The coating is applied in the usual way; the thickness of the coating thus applied is approximately 12 $\mu$m.

After the coating of the strip the strip is cold rolled to provide the strip with a variable thickness, having thicker portions, thinner portions and transitional portions between the thicker and thinner portions. The thicker portions are provided with a thickness of 2.2 mm and the thinner portions are provided with a thickness of 1.5 mm. The thicker portions have a length of 280 mm; the thinner portions have a length of 200 mm. The transitional portions have a length of 60 mm.

The coated strip having a variable thickness then is cut in tailor rolled blanks having a length of for instance 600 mm. These TRBs can for example be used to produce inner parts for a body in white for the automotive industry.

These TRBs can be shaped in the following way. The TRB is first shaped to obtain a precursor product by for instance deep drawing, that is a product that already has roughly the desired final shape. Then, the precursor product is heated to a temperature above the Ac1 temperature at a velocity of at least 5 °C/s, so above the transition temperature of the steel from ferrite into austenite. In practice, a temperature of 950 °C is chosen. The TRB is then shaped in the desired final form by for instance hot deep drawing. To provide the formed TRB with the desired properties, the hot formed TRB is quenched at a cooling velocity above the critical velocity, for instance a velocity of 30 °C/s. Due to the fast quenching, the structure of the steel is at least partially martensitic. The Rm value is approximately 1450 MPa, the elongation Ag is still 7 to 9 %.

According to a third example the starting point is a hot rolled steel strip having a width of 620 mm, a thickness of 2.0 mm and a length of for instance 500 m. The composition of the steel strip is 0.223 wt% C, 1.18 wt% Mn, 0.24 wt% Si, 0.004 wt% S, 0.012 wt% P, 0.212 wt% Cr, 0.0032 wt% B, 0.033 wt% Ti, <0.001 wt% Nb, 0.038 wt% Al, and 0.0038 wt% N. This steel type has a Rm value of at least 460 Mpa.

This steel strip is provided with a zinc layer by hot dip coating in a zinc bath having a composition of 1.8 wt% magnesium, 1.8 wt% aluminium, the remainder being zinc with unavoidable impurities. The coating is applied in the usual way; the thickness of the coating thus applied is approximately 10 $\mu$m.

After the coating of the strip the strip is cold rolled to provide the strip with a variable thickness, having thicker portions, thinner portions and transitional portions between the thicker and thinner portions. The thicker portions are provided with a thickness of 1.8 mm and the thinner portions are provided with a thickness of 1.2 mm. The thicker portions have a length of 320 mm; the thinner portions have a length of 160 mm. The transitional portions have a length of 60 mm.

The coated strip having a variable thickness then is cut in tailor rolled blanks having a length of approximately 600 mm. These TRBs can for example be used to produce inner parts for a body in white for the automotive industry.

These TRBs can be shaped thermomechanically in the following way. The TRB is heated to a temperature above the Ac1 temperature at a velocity of at least 5 °C/s, so above the transition temperature of the steel from ferrite into austenite. In practice, a temperature of 950 °C is chosen. The TRB is then shaped in the desired form by for instance hot deep drawing. To provide the formed TRB with the desired properties, the hot formed TRB is quenched at a cooling velocity above the critical velocity, for instance a velocity of 30 °C/s. Due to the fast quenching, the structure of the steel is at least partially martensitic. The Rm value is approximately 1450 MPa, the elongation Ag is still 5 to 7 %.

The coating with an aluminium alloy or zinc alloy can also be performed after the strip is cold rolled to provide the strip with a variable thickness.

The scope of the invention is determined by the accompanying claims.

**Claims**

1. Method for producing a coated steel strip for producing tailored blanks suitable for thermomechanical shaping comprising the following steps:

   - providing a hot-rolled steel strip;
   - coating the strip with a metallic coating;

   **characterized in that**,
   after the step of coating the strip, cold rolling the strip such that the strip obtains a variable thickness in its length direction, having at least thicker sections and thinner sections, with a section between each thicker and thinner section that gradually changes in thickness from the thicker section to the thinner section,
   such that tailor rolled blanks (TRBs) can be cut from this strip, wherein the strip has a width between 200 and 2000 mm, a thickness between 1 and 5 mm, and a length between 100 and 2000 m.

2. Method according to claim 1, wherein the cold rolling is performed such that the thicker sections obtain a thickness reduction of less than 15% and the thinner sections obtain a thickness reduction of more than 15%.

3. Method according to claim 1 or 2, wherein the hot-rolled steel strip is cold-rolled before the strip is provided with a variable thickness.

4. Method according to claim 1, 2 or 3, wherein the metallic coating is provided by hot dip coating using a bath of aluminium or an aluminium alloy, preferably an aluminium alloy consisting of 2 - 4 wt% iron and optionally 8 - 12 wt% silicon, the remainder being aluminium and unavoidable impurities, more preferably an aluminium alloy consisting of 2 - 3.5 wt% iron and 9 - 10 wt% silicon, the remainder being aluminium and unavoidable impurities.

5. Method according to claim 1, 2 or 3, wherein the metallic coating is provided by hot dip coating using a bath of zinc or a zinc alloy, preferably a zinc alloy consisting of 0.3 - 4.0 wt% magnesium and 0.05 - 6.0 wt% aluminium, optionally at most 0.2 wt% of one or more additional elements, the remainder being zinc and unavoidable impurities.

6. Method according to any one of the claims 1 - 5, wherein the steel strip has the composition in wt%:

$$0.15 < C < 0.5$$

$$0.5 < Mn < 3.0$$

$$0.1 < Si < 0.5$$

$$0.01 < Cr < 1.0$$

$$Ti < 0.2$$

$$Al < 0.1$$

$$P < 0.1$$

$$Nb < 0.1$$

$$N < 0.01$$

$$S < 0.05$$

$$0.0005 < B < 0.015$$

unavoidable impurities
the remainder being Fe.

7. Method according to claim 6, wherein the steel strip has the composition in wt%:

$$0.15 < C < 0.40$$

$$0.8 < Mn < 1.5$$

$$0.1 < Si < 0.35$$

$$0.01 < Cr < 1.0$$

$$Ti < 0.1$$

$$Al < 0.1$$

$$P < 0.05$$

$$Nb < 0.05$$

$$N < 0.01$$

$$S < 0.03$$

$$0.0005 < B < 0.010$$

unavoidable impurities
the remainder being Fe.

**8.** Method according to claim 7, wherein the steel strip has the composition in wt%:

$$0.15 < C < 0.25$$

$$1.0 < Mn < 1.5$$

$$0.1 < Si < 0.35$$

$$0.01 < Cr < 0.8, \text{ preferably } 0.1 < Cr < 0.4$$

$$0.01 < Ti < 0.07$$

$$Al < 0.1$$

$$P < 0.05$$

$$Nb < 0.05, \text{ preferably } Nb < 0.03$$

$$N < 0.01$$

$$S < 0.03$$

$$0.0015 < B < 0.008$$

unavoidable impurities
the remainder being Fe.

**9.** Method according to any one of the claims 6, 7 or 8, wherein $0 < Ti - 3.4*N$, preferably $0 < Ti - 3.4*N < 0.05$ wt%, more preferably $0 < Ti - 3.4*N < 0.02$ wt%.

**10.** Method according to any one of the preceding claims, wherein the strip is coated with a metal coating having a thickness between 1 and 50 $\mu$m, preferably a thickness between 1 and 20 $\mu$m for a zinc or zinc alloy coating and preferably a thickness between 5 and 30 $\mu$m for an aluminium or aluminium alloy coating.

**11.** Use of the coated steel strip provided in accordance with the method of any one of the preceding claims 1 - 10 for manufacturing a product with high mechanical properties, **characterised by** the following steps:

   • cutting the steel strip to obtain a blank having at least a thicker and a thinner section;
   • heating the blank to a temperature above the Ac1 temperature so as to at least partially bring the blank in the austenite phase;
   • shaping the blank to obtain the product;
   • cooling the product rapidly, preferably at a cooling rate higher than the critical cooling rate, to impart the product with high mechanical properties.

**12.** Use of the coated steel strip provided in accordance with the method of any one of the preceding claims 1 - 10 for manufacturing a product with high mechanical properties, **characterised by** the following steps:

• cutting the steel strip to obtain a blank having at least a thicker and a thinner section;
• shaping the blank to obtain a precursor product;
• heating the precursor product to a temperature above the Ac1 temperature so as to at least partially bring the blank in the austenite phase;
• shaping the precursor product to obtain the product;
• cooling the product rapidly, preferably at a cooling rate higher than the critical cooling rate, to impart the product with high mechanical properties.

13. Use of the steel strip according to claim 11 or 12, wherein the blank or precursor product is heated to a temperature above 950 ° C.

14. Use of the steel strip according to claim 11, 12 or 13, wherein excess material of the blank is removed by cutting after the shaping of the product.

**Patentansprüche**

1. Verfahren zur Herstellung eines beschichteten Stahlbands zur Herstellung von Tailored Blanks zur thermomechanischen Formgebung, die folgenden Schritte umfassend:

   - Vorsehen eines warmgewalzten Stahlbands;
   - Beschichten des Bands mit einer Metallbeschichtung;

   **gekennzeichnet durch**,
   nach dem Schritt des Beschichtens des Bands, Kaltwalzen des Bands derart, dass das Band eine variable Dicke in seiner Längsrichtung erhält, aufweisend zumindest dickere Teilabschnitte und dünnere Teilabschnitte, mit einem Teilabschnitt zwischen jedem dickeren und dünneren Teilabschnitt, der sich in der Dicke allmählich vom dickeren Teilabschnitt zum dünneren Teilabschnitt ändert, sodass Tailor Rolled Blanks (TRBs) aus diesem Band geschnitten werden können, wobei das Band eine Breite zwischen 200 und 2000 mm, eine Dicke zwischen 1 und 5 mm und eine Länge zwischen 100 und 2000 m aufweist.

2. Verfahren nach Anspruch 1, wobei das Kaltwalzen derart ausgeführt wird, dass die dickeren Teilabschnitte eine Dickenreduktion von weniger als 15% erfahren und die dünneren Teilabschnitte eine Dickenreduktion von mehr als 15% erfahren.

3. Verfahren nach einem der Ansprüche 1 oder 2, wobei das warmgewalzte Stahlband kaltgewalzt wird, bevor das Band mit einer variablen Stärke versehen wird.

4. Verfahren nach einem der Ansprüche 1, 2 oder 3, wobei die Metallbeschichtung durch Schmelztauchbeschichten unter Benutzung eines Bads aus Aluminium oder einer Aluminiumlegierung vorgesehen wird, vorzugsweise einer Aluminiumlegierung, die aus 2 bis 4 Gew.-% Eisen und optional 8 bis 12 Gew.-% Silizium besteht, wobei der Rest Aluminium und unvermeidbare Unreinheiten ist, weiter bevorzugt einer Aluminiumlegierung, die aus 2 bis 3,5 Gew.-% Eisen und optional 9 bis 10 Gew.-% Silizium besteht, wobei der Rest Aluminium und unvermeidbare Unreinheiten ist.

5. Verfahren nach einem der Ansprüche 1, 2 oder 3, wobei die Metallbeschichtung durch Schmelztauchbeschichten unter Benutzung eines Bads aus Zink oder einer Zinklegierung vorgesehen wird, vorzugsweise einer Zinklegierung, die aus 0,3 bis 4,0 Gew.-% Magnesium und 0,05 bis 6,0 Gew.-% Aluminium, optional höchstens 0,2 Gew.-% von einem oder mehr zusätzlichen Elementen, wobei der Rest Zink und unvermeidbare Unreinheiten ist.

6. Verfahren nach einem der Ansprüche 1 bis 5, wobei das Stahlband die folgende Zusammensetzung in Gew.-% aufweist:

$$0{,}15 < C < 0{,}5$$

$$0,5 \; < \; Mn \; < \; 3,0$$

$$0,1 \; < \; Si \; < \; 0,5$$

$$0,01 \; < \; Cr \; < \; 1,0$$

$$Ti \; < \; 0,2$$

$$Al \; < \; 0,1$$

$$P \; < \; 0,1$$

$$Nb \; < \; 0,1$$

$$N \; < \; 0,01$$

$$S \; < \; 0,05$$

$$0,0005 \; < \; B \; < \; 0,015,$$

unvermeidliche Unreinheiten,
wobei der Rest Fe ist.

7. Verfahren nach Anspruch 6, wobei das Stahlband die folgende Zusammensetzung in Gew.-% aufweist:

$$0,15 \; < \; C \; < \; 0,40$$

$$0,8 \; < \; Mn \; < \; 1,5$$

$$0,1 \; < \; Si \; < \; 0,35$$

$$0,01 \; < \; Cr \; < \; 1,0$$

$$Ti \; < \; 0,1$$

$$Al \; < \; 0,1$$

$$P \; < \; 0,05$$

$$Nb < 0,05$$

$$N < 0,01$$

$$S < 0,03$$

$$0,0005 < B < 0,010,$$

unvermeidliche Unreinheiten,
wobei der Rest Fe ist.

8. Verfahren nach Anspruch 7, wobei das Stahlband die folgende Zusammensetzung in Gew.-% aufweist:

$$0,15 < C < 0,25$$

$$1,0 < Mn < 1,5$$

$$0,1 < Si < 0,35$$

$$0,01 < Cr < 0,8, \text{ vorzugsweise } 0,1 < Cr < 0,4$$

$$0,01 < Ti < 0,07$$

$$Al < 0,1$$

$$P < 0,05$$

$$Nb < 0,05, \text{ vorzugsweise } Nb < 0,03$$

$$N < 0,01$$

$$S < 0,03$$

$$0,0015 < B < 0,008,$$

unvermeidliche Unreinheiten,
wobei der Rest Fe ist.

9. Verfahren nach einem der Ansprüche 6, 7 oder 8, wobei 0 < Ti - 3,4*N, vorzugsweise 0 < Ti - 3,4*N < 0,05 Gew.-%, weiter bevorzugt 0 < Ti - 3,4*N < 0,02 Gew.-%.

**10.** Verfahren nach einem der vorhergehenden Ansprüche, wobei das Band mit einer Metallbeschichtung mit einer Dicke zwischen 1 und 50 $\mu$m, vorzugsweise einer Dicke zwischen 1 und 20 $\mu$m für eine Zink- oder Zinklegierungsbeschichtung und vorzugsweise einer Dicke zwischen 5 und 30 $\mu$m für eine Aluminium- oder Aluminiumlegierungsbeschichtung beschichtet wird.

**11.** Verwendung des beschichteten Stahlbands, das gemäß dem Verfahren nach einem der vorhergehenden Ansprüche 1 bis 10 hergestellt ist, zur Herstellung eines Produkts mit hohen mechanischen Eigenschaften, **gekennzeichnet durch** die folgenden Schritte:

• Schneiden des Stahlbands zum Erhalten eines Zuschnitts mit zumindest einem dickeren und einem dünneren Teilabschnitt;
• Erhitzen des Zuschnitts auf eine Temperatur über der Ac1-Temperatur, um den Zuschnitt zumindest teilweise in die Austenitphase zu bringen;
• Formen des Zuschnitts, um das Produkt zu erhalten;
• schnelles Kühlen des Produkts, vorzugsweise mit einer Kühlrate, die über der kritischen Kühlrate liegt, um dem Produkt hohe mechanische Eigenschaften zu verleihen.

**12.** Verwendung des beschichteten Stahlbands, das gemäß dem Verfahren nach einem der vorhergehenden Ansprüche 1 bis 10 hergestellt ist, zur Herstellung eines Produkts mit hohen mechanischen Eigenschaften, **gekennzeichnet durch** die folgenden Schritte:

• Schneiden des Stahlbands, um ein Zuschnitt mit zumindest einem dickeren und einem dünneren Teilabschnitt zu erhalten;
• Formen des Zuschnitts, um ein Vorprodukt zu erhalten;
• Erhitzen des Vorprodukts auf eine Temperatur über der Ac1-Temperatur, um den Zuschnitt zumindest teilweise in die Austenitphase zu bringen;
• Formen des Vorprodukts, um das Produkt zu erhalten;
• schnelles Kühlen des Produkts, vorzugsweise mit einer Kühlrate, die über der kritischen Kühlrate liegt, um dem Produkt hohe mechanische Eigenschaften zu verleihen.

**13.** Verwendung des Stahlbands nach einem der Ansprüche 11 oder 12, wobei der Zuschnitt oder das Vorprodukt auf eine Temperatur über 950 °C erhitzt wird.

**14.** Verwendung des Stahlbands nach einem der Ansprüche 11, 12 oder 13, wobei überschüssiges Material des Zuschnitts durch Schneiden nach dem Formen des Produkts entfernt wird.

**Revendications**

**1.** Procédé de production d'une bande d'acier revêtue pour la production d'éléments taylorisés adaptés à la mise en forme, comprenant les étapes suivantes :

- prévision d'une bande d'acier laminée à chaud ;
- revêtement de la bande avec un revêtement métallique ;

**caractérisé en ce que**,
après l'étape de revêtement de la bande, la bande est laminée à froid de manière à ce que la bande obtienne une épaisseur variable dans son sens de la longueur, ait au moins des sections plus épaisses et des sections plus fines, avec une section entre chaque section plus épaisse et plus fine qui change graduellement d'épaisseur, la section plus épaisse devenant la section plus fine, de manière à ce que les ébauches laminées taylorisées (TRB) puissent être découpées dans cette bande, la bande ayant une largeur comprise entre 200 et 2000 millimètres, une épaisseur comprise entre 1 et 5 mm et une longueur comprise entre 100 et 2000 m.

**2.** Procédé selon la revendication 1, dans lequel le laminage à froid est réalisé de manière à ce que les sections plus épaisses obtiennent une réduction d'épaisseur de moins de 15 % et les sections les plus fines obtiennent une réduction d'épaisseur de plus de 15 %.

**3.** Procédé selon la revendication 1 ou 2, dans lequel la bande d'acier laminée à chaud est laminée à froid avant que la bande se voie impartir une épaisseur variable.

4.  Procédé selon la revendication 1, 2 ou 3, dans lequel le revêtement métallique est réalisé par revêtement par immersion à chaud en utilisant un bain d'aluminium ou un alliage d'aluminium, de préférence un alliage d'aluminium composé de 2 à 4 en poids de fer et en option de 8 à 12 % en poids de silicone, le reste étant de l'aluminium et des impuretés inévitables, plus préférentiellement un alliage d'aluminium composé de 2 à 3,5 % en poids de fer et 9 à 10 % en poids de silicone, le reste étant de l'aluminium et des impuretés inévitables.

5.  Procédé selon la revendication 1, 2 ou 3, dans lequel le revêtement métallique est réalisé par revêtement par immersion à chaud en utilisant un bain de zinc ou un alliage de zinc, de préférence un alliage de zinc composé de 0,3 à 4,0 % en poids de magnésium et de 0,05 à 6,0 % en poids d'aluminium, en option au plus de 0,2 % en poids d'un ou plusieurs éléments supplémentaires, le reste étant du zinc et des impuretés inévitables.

6.  Procédé selon l'une quelconque des revendications 1 à 5, dans lequel la bande en acier a la composition en % du poids suivants :

$$0,15 < C < 0,5$$

$$0,5 < Mn < 3,0$$

$$0,1 < Si < 0,5$$

$$0,01 < Cr < 1,0$$

$$Ti < 0,2$$

$$Al < 0,1$$

$$P < 0,1$$

$$Nb < 0,1$$

$$N < 0,01$$

$$S < 0,05$$

$$0,0005 < B < 0,015$$

impuretés inévitables,
le reste étant du Fe.

7.  Procédé selon la revendication 6, dans lequel la bande en acier a la composition en % du poids suivants :

$$0,15 < C < 0,40$$

$$0,8 < Mn < 1,5$$

$$0,1 < Si < 0,35$$

$$0,01 < Cr < 1,0$$

$$Ti < 0,1$$

$$Al < 0,1$$

$$P < 0,05$$

$$Nb < 0,05$$

$$N < 0,01$$

$$S < 0,03$$

$$0,0005 < B < 0,010$$

impuretés inévitables,
le reste étant du Fe.

8. Procédé selon la revendication 7, dans lequel la bande en acier a la composition en % du poids suivants :

$$0,15 < C < 0,25$$

$$1,0 < Mn < 1,5$$

$$0,1 < Si < 0,35$$

$$0,01 < Cr < 0,8, \text{ de préférence } 0,1 < Cr < 0,4$$

$$0,01 < Ti < 0,07$$

$$Al < 0,1$$

$$P < 0,05$$

$$Nb < 0,05, \text{ de préférence } Nb < 0,03$$

$$N < 0,01$$

$$S < 0,03$$

$$0,0015 < B < 0,008$$

impuretés inévitables,
le reste étant du Fe.

9. Procédé selon l'une quelconque des revendications 6, 7 ou 8, dans lequel on a 0 < Ti - 3,4\*N, de préférence 0 < Ti - 3,4\*N < 0,05 en % de poids, plus préférentiellement 0 < Ti - 3,4\*N < 0,02 % en poids.

10. Procédé selon l'une quelconque des revendications précédentes, dans lequel la bande est revêtue avec revêtement métallique ayant une épaisseur comprise entre 1 et 50 $\mu$m, de préférence une épaisseur comprise entre 1 et 20 $\mu$m pour un revêtement en zinc ou en alliage de zinc et de préférence une épaisseur comprise entre 5 et 30 $\mu$m pour un revêtement en aluminium ou en alliage d'aluminium.

11. Utilisation de la bande d'acier revêtue réalisés suivant le procédé de l'une quelconque des revendications précédentes 1 à 10 pour la fabrication d'un produit ayant de hautes propriétés mécaniques, **caractérisée par** les étapes suivantes :

   • découpage de la bande en acier pour obtenir une ébauche ayant au moins une section épaisse et une section fine ;
   • chauffage de l'ébauche à une température supérieure à la température Ac1 de manière à amener au moins partiellement l'ébauche en phase austénitique ;
   • mise en forme de l'ébauche pour obtenir le produit ;
   • refroidissement rapide du produit, de préférence à une vitesse de refroidissement supérieure à la vitesse de refroidissement critique, pour impartir au produit de hautes propriétés mécaniques.

12. Utilisation de la bande d'acier revêtue réalisés suivant le procédé de l'une quelconque des revendications précédentes 1 à 10 pour la fabrication d'un produit ayant de hautes propriétés mécaniques, **caractérisée par** les étapes suivantes :

   • découpage de la bande en acier pour obtenir une ébauche ayant au moins une section épaisse et une section fine ;
   • mise en forme de l'ébauche pour obtenir le produit ;
   • chauffage du produit précurseur à une température supérieure à la température Ac1 de manière à amener au moins partiellement l'ébauche en phase austénitique ;
   • mise en forme du produit précurseur pour obtenir le produit ;
   • refroidissement rapide du produit, de préférence à une vitesse de refroidissement supérieure à la vitesse de refroidissement critique, pour impartir au produit de hautes propriétés mécaniques.

13. Utilisation de la bande d'acier selon la revendication 11 ou 12, dans laquelle l'ébauche ou le produit précurseur est chauffé à une température supérieure à 950 °C.

14. Utilisation de la bande d'acier selon la revendication 11, 12 ou 13, dans laquelle le matériau excédentaire de l'ébauche est enlevé par découpage après la mise en forme du produit.

**EP 2 183 402 B1**

**Patent documents cited in the description**

- GB 706681 A
- WO 2008113426 A
- DE 102005031461